# EUROPÄISCHE PATENTSCHRIFT

(11) **EP 1 605 569 B1**
(45) Veröffentlichungstag und Bekanntmachung des Hinweises auf die Patenterteilung: **15.11.2006**
(21) Anmeldenummer: 04013730.9
(22) Anmeldetag: 11.06.2004
(51) Int. Cl.: H02J 1/06, B60R 16/02

(54) **Redundante Spannungsversorgung mit Koaxialkabel**
Redundant power supply with coaxial cable
Alimentation redondante avec câble coaxiale

(43) Veröffentlichungstag der Anmeldung: 14.12.2005
(73) Patentinhaber: Delphi Technologies, Inc., Troy, MI 48007 (US)
(72) Erfinder: Altrogge, Rainer, 50997 Köln (DE); Denkelmann, Rainer, 44625 Herne (DE)
(74) Vertreter: Manitz, Finsterwald & Partner GbR

(56) Entgegenhaltungen:
- EP-A- 0 812 049
- DE-A- 3 731 537
- DE-A- 10 017 455
- DE-A- 10 053 335
- GB-A- 2 087 670
- US-A- 4 423 620
- US-A- 5 666 281

## Beschreibung

Die Erfindung betrifft eine Spannungsversorgung insbesondere für Kraftfahrzeuge, mit wenigstens einer Spannungsquelle und einem Leitungssystem, über das zumindest eine Last mit der Spannungsquelle verbindbar ist, wobei eine jeweilige Last einerseits an Masse liegt und andererseits mit einer jeweiligen Leitung des Leitungssystems verbunden ist.

Es ist davon auszugehen, dass in naher Zukunft sogenannte x-by-wire-Systeme eingeführt werden. Dabei werden durch elektrische Kabel und Elektronik mechanische und/oder hydraulische Systeme ersetzt. Das "x" in x-by-wire steht dabei als Platzhalter, beispielsweise für Bremsen (brakeby-wire), Lenkung (steer-by-wire) oder Schaltung (shift-by-wire).

X-by-wire-Systeme sind nun aber in Bezug auf die Sicherheit sehr kritisch. Es wird daher eine redundante Spannungsversorgung erforderlich sein, was bedeutet, dass zur Versorgung einer jeweiligen Last zwei Leitungen erforderlich sein werden, die im Spannungsversorgungskasten getrennt schaltbar sind.

Die Einführung z.B. eines 42V-Netzes wird Probleme im Kabelbaum mit sich bringen. Das hohe Potential kann zu einem Funkendurchschlag führen. Insbesondere der parallele Funkendurchschlag zwischen einer jeweiligen Leitung und dem Fahrzeugchassis aufgrund von Defekten in der Leitungsisolation ist als mögliche Hauptursache für ernsthafte Schäden (Feuer) in z.B. 42V-Fahrzeugen in Betracht zu ziehen. Um die Gefahr eines Funkendurchschlags zu beseitigen bzw. einen jeweiligen Funkendurchschlag zu erfassen sind komplexe, teure Systeme (z.B. Fehlstromerfassung) erforderlich.

In Fahrzeugen mit einem Zweispannungs-System (z.B. 14V, 42V) ist ein jeweiliger Kurzschluss zwischen den beiden Potentialen als äußerst kritisch anzusehen. Die Folgen einer solchen Störung sind nicht voraussagbar, und es ist derzeit keine Lösung zur Vermeidung einer solchen Störung bekannt.

Eine Spannungsversorgung der eingangs genannten Art ist beispielsweise in der EP-A-0 812 049 beschrieben. Bei dieser bekannten Spannungsversorgung gehen von einer Klemme der Spannungsquelle zwei herkömmliche Versorgungsleitungen aus, so dass die elektrischen Lasten im Normalfall über zwei Versorgungsleitungen versorgt werden. Wird bei einer jeweiligen Versorgungsleitung ein Kurzschluss festgestellt, so wird die Verbindung zwischen dieser Versorgungsleitung und der Last durch entsprechende Schaltmittel unterbrochen.

In der DE-A-37 31 537 ist eine Schaltungsanordnung zum Überwachen eines mit einer Klemme einer Spannungsquelle verbundenen Leiters einer mehradrigen Leitung beschrieben, wobei beispielsweise der Außenleiter einer Koaxialleitung entsprechend überwacht wird. Dabei wird der betreffende Leiter auf eine Unterbrechung und ggf. auf einem Kurzschluss mit der anderen Klemme der Spannungsquelle hin überwacht.

Der Erfindung liegt die Aufgabe zugrunde, eine verbesserte Spannungsversorgung der eingangs genannten Art zu schaffen, mit der die zuvor genannten Probleme beseitigt sind. Dabei soll allgemein insbesondere die Sicherheit von x-by-wire- und beispielsweise 42V-Systemen deutlich erhöht werden. Grundsätzlich soll die Spannungsversorgung jedoch auch für Systeme geeignet sein, die für andere Spannungswerte als z.B. 42V ausgelegt sind.

Diese Aufgabe wird nach der Erfindung dadurch gelöst, dass das Leitungssystem zumindest eine Koaxialleitung umfasst und die betreffende Last wahlweise über den Innenleiter und/oder den Außenleiter mit der Spannungsquelle verbindbar ist, wobei zwischen der nicht als Masse vorgesehenen Klemme der Spannungsquelle und dem Eingang des Innenleiters sowie zwischen der nicht als Masse vorgesehenen Klemme der Spannungsquelle und dem Eingang des Außenleiters jeweils Schaltmittel vorgesehen sind, über die der jeweilige Leiter mit der nicht als Masse vorgesehenen Klemme der Spannungsquelle verbindbar bzw. die jeweilige Verbindung unterbrechbar ist.

Mit der Versorgung einer jeweiligen Last über eine Koaxialleitung stehen mit dem Innenleiter und dem Außenleiter der Koaxialleitung von vornherein zwei Leiter für eine redundante Spannungsversorgung zur Verfügung. Im Vergleich mit herkömmlichen Leitungen zeichnen sich Koaxialkabel überdies durch eine höhere mechanische Stabilität aus. Während eine Beschädigung der Isolierung einer herkömmlichen Leitung normalerweise ernsthafte Probleme mit sich bringt, führt eine Beschädigung der Abschirmung, d.h. des Außenleiters oder Mantels des Koaxialkabels zu keinerlei Problemen. Die betreffende Störung kann erfasst und behoben werden.

Bevorzugt ist die betreffende Last wahlweise über den Innenleiter oder den Außenleiter mit der Spannungsquelle verbindbar. Die Schaltmittel sind zweckmäßigerweise also so ansteuerbar, dass die betreffende Last jeweils nur über einen der beiden Leiter der Koaxialleitung mit der Spannungsquelle verbunden ist.

Vorteilhafterweise sind Mittel zur Überwachung des jeweiligen Zustandes der beiden Leiter der Koaxialleitung vorgesehen.

Bevorzugt ist die betreffende Last in Abhängigkeit vom jeweiligen Zustand der beiden Leiter der Koaxialleitung über den einen bzw. den anderen Leiter mit der Spannungsquelle verbindbar.

So kann die betreffende Last bei sich in einem fehlerfreien Zustand befindendem Innenleiter der Koaxialleitung vorzugsweise über diesen Innenleiter mit der Spannungsquelle verbindbar sein, während bei sich in einem fehlerhaften Zustand befindendem Innenleiter die betreffende Last über den Außenleiter der Koaxialleitung mit der Spannungsquelle verbindbar ist.

Ein fehlerhafter Zustand des Innenleiters der Koaxialleitung kann insbesondere dann vorliegen, wenn dieser Innenleiter unterbrochen oder gegen Masse kurzgeschlossen ist.

Ein fehlerhafter Zustand des Außenleiters der Koaxialleitung liegt insbesondere dann vor, wenn dieser Außenleiter gegen Masse kurzgeschlossen ist. Ein fehlerhafter Zustand des Außenleiters der Koaxialleitung kann insbesondere auch dann vorliegen, wenn dieser Außenleiter gegen ein anderes Potential als Masse kurzgeschlossen ist, was insbesondere bei Zweispannungssystemen wie beispielsweise einem 14V/42V-System der Fall sein kann.

Grundsätzlich kann das jeweilige System jedoch auch für andere Spannungswerte ausgelegt sein. So können x-by-wire-Systeme z.B. auch in der 12V-Technik Anwendung finden.

Bei einer bevorzugten praktischen Ausführungsform der erfindungsgemäßen Spannungsversorgung sind Mittel zur Signalisierung eines fehlerhaften Innenleiters und/ oder Mittel zur Signalisierung eines fehlerhaften Außenleiters der Koaxialleitung vorgesehen.

Die Mittel zur Überwachung des jeweiligen Zustandes der beiden Leiter der Koaxialleitung umfassen vorteilhafterweise zumindest drei insbesondere gleiche Widerstände, von denen einer zwischen die nicht als Masse vorgesehene Klemme der Spannungsquelle und den Eingang des Außenleiters, einer zwischen dem Eingang des Außenleiters und Masse und einer zwischen dem Ausgang des Außenleiters und die betreffende Last geschaltet ist, wobei die Zustandsüberwachung über die Spannung erfolgt, die an dem zwischen den Eingang des Außenleiters und Masse geschalteten Widerstand abfällt.

Dabei kann zwischen den Ausgang des Innenleiters und die Last und den Ausgang des Außenleiters und die Last jeweils eine in Durchlassrichtung gepolte Diode geschaltet sein, wobei die zwischen dem Ausgang des Au-βenleiters und der Last vorgesehene Diode zu dem zwischen dem Ausgang des Außenleiters und der Last vorgesehenen Widerstand parallelgeschaltet ist. Zweckmäßigerweise besitzen die Widerstände jeweils einen Wert von etwa 1 kΩ. Die Schaltmittel umfassen bevorzugt jeweils einen elektronischen Schalter. Dabei können diese Schaltmittel insbesondere jeweils einen Transistor, bevorzugt einen Feldeffekttransistor, umfassen.

Vorteilhafterweise umfasst die Spannungsversorgung ein 42V-Netz. Sie kann insbesondere auch ein Zweispannungsnetz, vorzugsweise ein 14V/42V-Netz umfassen. Wie bereits erwähnt, kann das jeweilige System grundsätzlich jedoch auch für andere Spannungswerte ausgelegt sein.

Bevorzugt ist die erfindungsgemäße Spannungsversorgung in Verbindung mit einem x-by-wire-System vorgesehen.

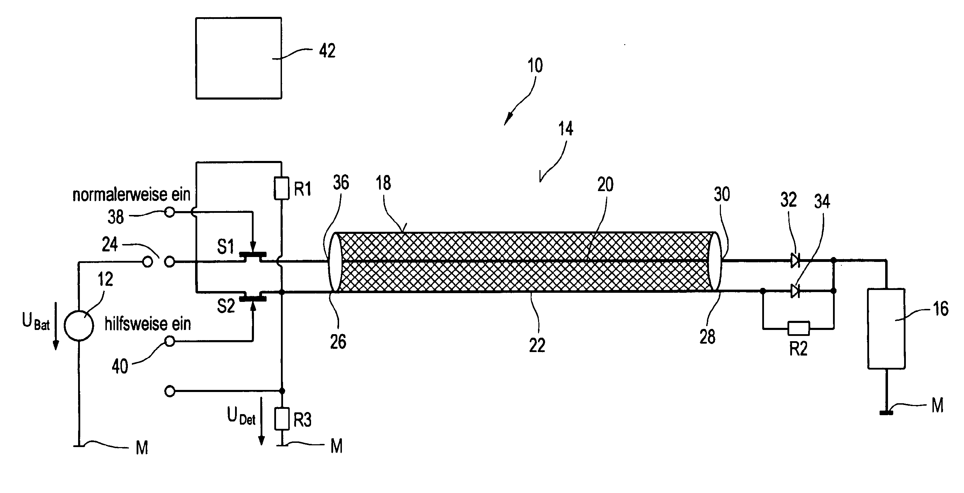

Die Erfindung wird im Folgenden anhand eines Ausführungsbeispiels unter Bezugnahme auf die Zeichnung näher erläutert.

Die einzige Figur der Zeichnung zeigt in schematischer Teildarstellung eine beispielhafte Ausführungsform einer Spannungsversorgung 10, die insbesondere in Kraftfahrzeugen einsetzbar ist.

Die Spannungsversorgung 10 umfasst eine Spannungsquelle 12, bei der es sich insbesondere um eine Batterie, vorzugsweise Kraftfahrzeugbatterie, handeln kann, sowie ein Leitungssystem 14, über das zumindest eine Last 16 mit der Spannungsquelle 12 verbindbar ist. Dabei liegt eine jeweilige Last 16 einerseits an Masse M, während sie andererseits mit einer jeweiligen Leitung 18 des Leitungssystems 14 verbunden ist.

In der einzigen Figur ist der Einfachheit halber nur eine Last 16 mit zugeordneter Leitung 18 dargestellt. Grundsätzlich können jedoch auch mehrere solche Lasten 16 und Leitungen 18 vorgesehen sein.

Wie anhand der einzigen Figur zu erkennen ist, ist als Leitung eine Koaxialleitung 18 vorgesehen. Dabei ist die dieser Koaxialleitung 18 zugeordnete Last 16 wahlweise über den Innenleiter 20 oder den Außenleiter 22, d.h. die Abschirmung bzw. den Mantel der Koaxialleitung 18 mit der Spannungsquelle 12 verbindbar.

Es sind Mittel R1 - R3 zur Überwachung des jeweiligen Zustandes der beiden Leiter 20, 22 der Koaxialleitung vorgesehen. Zudem ist die betreffende Last 16 in Abhängigkeit vom jeweiligen Zustand der beiden Leiter 20, 22 der Koaxialleitung 18 über den einen bzw. den anderen Leiter 20 bzw. 22 mit der Spannungsquelle 12 verbindbar.

Dabei ist die Last 16 bei sich in einem fehlerfreien Zustand befindendem Innenleiter 20 der Koaxialleitung 18 über diesen Innenleiter 20 mit der Spannungsquelle 12 verbindbar, während bei sich in einem fehlerhaften Zustand befindendem Innenleiter 20 die Last 16 über den Außenleiter 22 der Koaxialleitung 18 mit der Spannungsquelle 12 verbindbar ist.

Ein fehlerhafter Zustand des Innenleiters 20 der Koaxialleitung 18 liegt insbesondere dann vor, wenn dieser Innenleiter 20 unterbrochen oder gegen Masse M kurzgeschlossen ist. Dagegen kann ein fehlerhafter Zustand des Außenleiters 22 der Koaxialleitung 18 insbesondere dann vorliegen, wenn dieser Außenleiter 22 gegen Masse M kurzgeschlossen ist. Umfasst die Spannungsversorgung beispielsweise ein Zweispannungs-System, insbesondere 14V/42V-System, so kann ein fehlerhafter Zustand des Außenleiters insbesondere auch dann vorliegen, wenn dieser Außenleiter 22 gegen ein anderes Potential als Masse kurzgeschlossen ist.

Zudem können insbesondere auch Mittel zur Signalisierung eines fehlerhaften Innenleiters 20 und/oder Mittel zur Signalisierung eines fehlerhaften Außenleiters 22 der Koaxialleitung 18 vorgesehen sein.

Im vorliegenden Fall umfassen die Mittel zur Überwachung des jeweiligen Zustandes der beiden Leiter 20, 22 der Koaxialleitung 18 drei vorzugsweise gleiche Widerstände R1 - R3. Dabei ist ein Widerstand R 1 zwischen die nicht als Masse M vorgesehene Klemme 24 der Spannungsquelle 12 und dem Eingang 26 des Außenleiters 22, der Widerstand R3 zwischen den Eingang 26 des Außenleiters 22 und Masse und der Widerstand R2 zwischen dem Ausgang 28 des Außenleiters 22 und die Last 16 geschaltet. Die Zustandsüberwachung erfolgt schließlich über die Spannung U_{Detect}, die an dem zwischen den Eingang 26 des Außenleiters 22 und Masse M geschalteten Widerstand R3 abfällt.

Zudem ist zwischen den Ausgang 30 des Innenleiters 20 und die Last 16 und den Ausgang 28 des Außenleiters 22 und die Last 16 jeweils eine in Durchlassrichtung gepolte Diode 32 bzw. 34 geschaltet. Die zwischen dem Ausgang 28 des Außenleiters 22 und der Last 16 vorgesehene Diode 34 ist hierbei zu dem zwischen dem Ausgang 28 des Außenleiters 22 und der Last 16 vorgesehenen Widerstand R2 parallel geschaltet. Im vorliegenden Fall besitzen die Widerstände R1 - R3 jeweils einen Wert von beispielsweise etwa 1 kΩ.

Zwischen der nicht als Masse M vorgesehenen Klemme 24 der Spannungsquelle 12 und dem Eingang 36 des Innenleiters 20 sowie zwischen der nicht als Masse M vorgesehene Klemme 24 der Spannungsquelle 12 und dem Eingang 26 des Außenleiters 22 sind jeweils Schaltmittel S1 bzw. S2 vorgesehen, über die der jeweilige Leiter 20 bzw. 22 mit der nicht als Masse M vorgesehenen Klemme 24 der Spannungsquelle 12 verbindbar bzw. die jeweilige Verbindung unterbrechbar ist. Wie anhand der einzigen Figur zu erkennen ist, liegt die andere Klemme der Spannungsquelle V_{Bat} an Masse M.

Die Schaltmittel S1, S2 umfassen jeweils einen elektronischen Schalter S1 bzw. S2, bei dem es sich beispielsweise um einen Transistor, im vorliegenden Fall beispielsweise einen Feldeffekttransistor, handeln kann. Die Steueranschlüsse 38 bzw. 40 werden über eine Steuereinrichtung 42 angesteuert, bei der es sich beispielsweise um das Steuergerät des betreffenden Fahrzeugs handeln kann. Über diese Steuereinrichtung 42 wird dann auch die am Widerstand R3 abfallende Spannung U_{Detect} entsprechend überwacht. Der Widerstand R3 kann insbesondere in der Steuereinrichtung 42 bzw. dem Steuergerät selbst verbaut sein (siehe auch weitere unten).

Die Spannungsversorgung 10 kann nun insbesondere ein 42V-Netz umfassen. Grundsätzlich kann auch ein Zweispannungsnetz, insbesondere ein 14V/42V-Netz vorgesehen sein.

Mit besonderem Vorteil kann die Spannungsversorgung 10 in Verbindung mit einem x-by-wire-System vorgesehen sein.

Im Ergebnis erhält man somit eine sichere, redundante Spannungsversorgung für x-by-wire-Systeme und 42V- bzw. 14V/42V-Lasten.

Unter den hier verwendeten Begriffen "Spannungsversorgung" und "Spannungsquelle" sei allgemein eine beliebige Energieversorgung zu verstehen, die anstatt oder zusätzlich zu einer Spannungsquelle generell insbesondere auch eine Stromquelle umfassen kann. Zur Zustandsüberwachung kann generell auch ein Strom überwacht werden.

Im Folgenden werden beispielsweise vier denkbare Betriebszustände der Spannungsversorgung 10 wiedergegeben:

### a) Normaler Betrieb

Der Feldeffekttransistor S1 ist eingeschaltet, während der Feldeffekttransistor S2 ausgeschaltet ist. Das Potential am Außenleiter 22 bzw. die am Widerstand R3 abfallende Spannung U_{Detect} beträgt etwa 0,66 U_{Bat} (U_{Bat} = Spannung der Spannungsquelle oder Autobatterie 12). Die Last 16 wird also über den Innenleiter 20 der Koaxialleitung 18 versorgt.

### b) Innenleiter 20 unterbrochen oder Masse kurzgeschlossen

Die überwachte Spannung U_{Detect} beträgt etwa 0,5 U_{Bat}. Anhand dieses Spannungswertes wird z.B. über die Steuereinrichtung 42 erkannt, dass der Innenleiter 20 sich in einem fehlerhaften Zustand befindet. Der Feldeffekttransistor S1 wird daraufhin abgeschaltet. Demgegenüber wird der Feldeffekttransistor S2 eingeschaltet. Die Last 16 wird jetzt also über den Außenleiter 22 versorgt, womit auch weiterhin ein normaler Betrieb möglich ist. Zur Signalisierung des fehlerhaften Innenleiters 20 kann ein entsprechendes Warnsignal erzeugt werden.

### c) Außenleiter gegen Masse kurzgeschlossen

Die überwachte Spannung U_{Detect} beträgt in diesem Fall OV. Der Feldeffekttransistor S1 bleibt eingeschaltet. Die Last 16 kann also im normalen Betrieb versorgt werden. Zur Signalisierung des fehlerhaften Außenleiters 22 kann ein entsprechendes Warnsignal erzeugt werden.

### d) Kurzschluss des Außenleiters gegen ein anderes Potential als Masse

Durch eine entsprechende Analyse der am Widerstand R3 abfallenden Spannung U_{Detect}, die insbesondere durch die Steuereinrichtung 42 erfolgen kann, kann eine entsprechende Störung festgestellt werden. Der Feldeffekttransistor S1 bleibt eingeschaltet, so dass die Last 16 im normalen Betrieb versorgt werden kann. Zur Signalisierung der Störung kann ein entsprechendes Warnsignal erzeugt werden.

Bei einem störungsfreien Betrieb besitzt der Außenleiter 22 der Koaxialleitung 18 ein Potential, das etwa 0,66 U_{Bat} entspricht. Bei U_{Bat} = 42V sind dies also 28V. 28V ist bezüglich der Gefahr eines Funkendurchschlags als unkritisch anzusehen, wobei der hohe Wert der Widerstände R1 - R3 verhindert, dass ein höherer Strom aus der Leitung gezogen wird.

Ein Kurzschluss des Außenleiters gegen ein anderes Potential bedeutet allerdings nicht, dass der Außenleiter z.B. eines 12V-Systems Kurzschluss gegen z.B. 42V bekommt. Dies würde zwar detektiert werden, würde aber die Last mit der 3-fachen Spannung versorgen und gegebenenfalls zerstören bzw. die Sicherung auslösen.

### e) Ausfall der Detect-Leitung

Bei einem Ausfall der Detect-Leitung selbst, wie auch bei einem Kurzschluss der Detect-Leitung gegen Masse oder auch gegen z.B. 12/42Volt wird dies in der Steuereinrichtung 42 erkannt und kann zur Anzeige gebracht werden.
Damit dies möglich ist, sollte der Widerstand R3 vorzugsweise in der Steuereinrichtung 42 selbst verbaut sein.

Im Vergleich mit herkömmlichen Leitungen weisen Koaxialleitungen eine höhere mechanische Stabilität auf. Während eine Beschädigung der Isolierung einer herkömmlichen Leitung normalerweise ernsthafte Probleme mit sich bringt, führt eine Beschädigung der Isolierung bzw. Abschirmung eines Koaxialkabels zu keinerlei Problemen. Die betreffende Störung kann erfasst und behoben werden.

### Bezugszeichenliste

- 10: Spannungsversorgung
- 12: Spannungsquelle
- 14: Leitungssystem
- 16: Last
- 18: Koaxialleitung
- 20: Innenleiter
- 22: Außenleiter
- 24: Klemme
- 26: Eingang
- 28: Eingang
- 30: Ausgang
- 32: Diode
- 34: Diode
- 36: Eingang
- 38: Steueranschluss
- 40: Steueranschluss
- 42: Steuereinrichtung

- R1: Widerstand
- R2: Widerstand
- R3: Widerstand
- S1: Feldeffekttransistor
- S2: Feldeffekttransistor
- U_{Bat}: Batteriespannung
- U_{Detect}: Überwachungsspannung

## Patentansprüche

1. Spannungsversorgung (10) insbesondere für Kraftfahrzeuge, mit wenigstens einer Spannungsquelle (12) und einem Leitungssystem (14), über das zumindest eine Last (16) mit der Spannungsquelle (12) verbindbar ist, wobei eine jeweilige Last (16) einerseits an Masse (M) liegt und andererseits mit einer jeweiligen Leitung (18) des Leitungssystems (14) verbunden ist,
**dadurch gekennzeichnet,**
**dass** das Leitungssystem zumindest eine Koaxialleitung (18) umfasst und die betreffende Last (16) wahlweise über den Innenleiter (20) und/ oder den Außenleiter (22) mit der Spannungsquelle (12) verbindbar ist, wobei zwischen der nicht als Masse (M) vorgesehenen Klemme (24) der Spannungsquelle (12) und dem Eingang (36) des Innenleiters (20) sowie zwischen der nicht als Masse (M) vorgesehenen Klemme (24) der Spannungsquelle (12) und dem Eingang (26) des Außenleiters (22) jeweils Schaltmittel (S1 bzw. S2) vorgesehen sind, über die der jeweilige Leiter (20 bzw. 22) mit der nicht als Masse (M) vorgesehenen Klemme (24) der Spannungsquelle (12) verbindbar bzw. die jeweilige Verbindung unterbrechbar ist.

2. Spannungsversorgung nach Anspruch 1,
**dadurch gekennzeichnet,**
**dass** die Schaltmittel (S1, S2) so ansteuerbar sind, dass die betreffende Last (16) jeweils nur über einen der beiden Leiter (20, 22) der Koaxialleitung (18) mit der Spannungsquelle (12) verbunden ist.

3. Spannungsversorgung nach Anspruch 1 oder 2,
**dadurch gekennzeichnet,**
**dass** Mittel (R 1 - R3) zur Überwachung des jeweiligen Zustandes der beiden Leiter (20, 22) der Koaxialleitung (18) vorgesehen sind.

4. Spannungsversorgung nach einem der vorhergehenden Ansprüche,
**dadurch gekennzeichnet,**
**dass** die betreffende Last (16) in Abhängigkeit vom jeweiligen Zustand der beiden Leiter (20, 22) der Koaxialleitung (18) über den einen bzw. den anderen Leiter mit der Spannungsquelle (12) verbunden ist.

5. Spannungsversorgung nach Anspruch 4,
**dadurch gekennzeichnet,**
**dass** bei sich in einem fehlerfreien Zustand befindendem Innenleiter (20) der Koaxialleitung (18) die betreffende Last (16) über diesen Innenleiter (20) mit der Spannungsquelle (12) verbunden ist.

6. Spannungsversorgung nach Anspruch 4 oder 5,
**dadurch gekennzeichnet,**
**dass** bei sich in einem fehlerhaften Zustand befindendem Innenleiter (20) die betreffende Last (16) über den Außenleiter (22) der Koaxialleitung (18) mit der Spannungsquelle (12) verbunden ist.

7. Spannungsversorgung nach einem der vorhergehenden Ansprüche,
**dadurch gekennzeichnet,**
**dass** ein fehlerhafter Zustand des Innenleiters (20) der Koaxialleitung (18) vorliegt, wenn dieser Innenleiter (20) unterbrochen oder gegen Masse (M) kurzgeschlossen ist.

8. Spannungsversorgung nach einem der vorhergehenden Ansprüche,
**dadurch gekennzeichnet,**
**dass** ein fehlerhafter Zustand des Außenleiters (22) der Koaxialleitung (18) vorliegt, wenn dieser Außenleiter (22) gegen Masse (M) kurzgeschlossen ist.

9. Spannungsversorgung nach einem der vorhergehenden Ansprüche,
**dadurch gekennzeichnet,**
**dass** ein fehlerhafter Zustand des Außenleiters (22) der Koaxialleitung (18) vorliegt, wenn dieser Außenleiter (22) gegen ein anderes Potential als Masse (M) kurzgeschlossen ist.

10. Spannungsversorgung nach einem der vorhergehenden Ansprüche,
**dadurch gekennzeichnet,**
**dass** Mittel zur Signalisierung eines fehlerhaften Innenleiters (20) und/oder Mittel zur Signalisierung eines fehlerhaften Außenleiters (22) der Koaxialleitung (18) vorgesehen sind.

11. Spannungsversorgung nach einem der vorhergehenden Ansprüche,
**dadurch gekennzeichnet,**
**dass** die Mittel zur Überwachung des jeweiligen Zustandes der beiden Leiter (20, 22) der Koaxialleitung (18) zumindest drei vorzugsweise gleiche Widerstände (R1 - R3) umfassen, von denen einer (R1) zwischen die nicht als Masse (M) vorgesehene Klemme (24) der Spannungsquelle (12) und den Eingang (26) des Außenleiters (22), einer (R3) zwischen den Eingang (26) des Außenleiters (22) und Masse (M) und einer (R2) zwischen den Ausgang (28) des Außenleiters (22) und die betreffende Last (16) geschaltet ist, wobei die Zustandsüberwachung über die Spannung (U_{Detect}) erfolgt, die an dem zwischen den Eingang (26) des Außenleiters (22) und Masse (M) geschalteten Widerstand (R3) abfällt.

12. Spannungsversorgung nach Anspruch 11,
**dadurch gekennzeichnet,**
**dass** zwischen den Ausgang (30) des Innenleiters (20) und die Last (16) und den Ausgang (28) des Außenleiters (22) und die Last (16) jeweils eine in Durchlassrichtung gepolte Diode (32 bzw. 34) geschaltet ist, wobei die zwischen dem Ausgang (28) des Außenleiters (22) und der Last (16) vorgesehene Diode (34) zu dem zwischen dem Ausgang (28) des Außenleiters (22) und der Last (16) vorgesehenen Widerstand (R2) parallel geschaltet ist.

13. Spannungsversorgung nach Anspruch 11 oder 12,
**dadurch gekennzeichnet,**
**dass** die Widerstände (R1 - R3) jeweils einen Wert von etwa 1 kΩ besitzen.

14. Spannungsversorgung nach einem der vorhergehenden Ansprüche,
**dadurch gekennzeichnet,**
**dass** die Schaltmittel jeweils einen elektronischen Schalter (S1 bzw. S2) umfassen.

15. Spannungsversorgung nach Anspruch 14,
**dadurch gekennzeichnet,**
**dass** die Schaltmittel jeweils einen Transistor (S1 bzw. S2), insbesondere einen Feldeffekttransistor, umfassen.

16. Spannungsversorgung nach einem der vorhergehenden Ansprüche,
**dadurch gekennzeichnet,**
**dass** es ein 12V- oder 42V-Netz umfasst.

17. Spannungsversorgung nach einem der vorhergehenden Ansprüche,
**dadurch gekennzeichnet,**
**dass** es ein Zweispannungsnetz, insbesondere ein 14V/42V-Netz umfasst.

18. Spannungsversorgung nach einem der vorhergehenden Ansprüche,
**dadurch gekennzeichnet,**
**dass** es in Verbindung mit einem x-by-wire-System vorgesehen ist.

## Claims

1. A voltage supply (10), in particular for motor vehicles, comprising at least one voltage source (12) and a lead system (14) via which at least one load (16) can be connected to the voltage source (12), with a respective load (16) being connected to ground (M), on the one hand, and being connected to a respective lead (18) of the lead system (14), on the other hand,
**characterized in that**
the lead system includes at least one coaxial lead (18) and the respective load (16) can be optionally connected to the voltage source (12) selectively via the inner conductor (20) and/or the outer conductor (22), with respective switching means (S1 and S2) being provided between the terminal (24) of the voltage source (12) not provided as ground (M) and the input (36) of the inner conductor (20) and between the terminal (24) of the voltage source (12) not provided as ground (M) and the input (26) of the outer conductor (22), with the respective conductor (20 or 22) being capable of being connected via said switching means to the terminal (24) of the voltage source (12) not provided as ground (M) or with the respective connection being capable of being interrupted by said switching means.

2. A voltage supply in accordance with claim 1, **characterized in that** the switching means (S1, S2) can be controlled such that the respective load (16) is in each case only connected to the voltage source (12) via one of the two conductors (20, 22) of the coaxial lead (18).

3. A voltage supply in accordance with claim 1 or claim 2, **characterized in that** means (R1 - R3) for the monitoring of the respective state of the two conductors (20, 22) of the coaxial lead (18) are provided.

4. A voltage supply in accordance with any one of the preceding claims, **characterized in that** the respective load (16) is connected to the voltage source (12) via the one or the other conductor in dependence on the respective state of the two conductors (20, 22) of the coaxial lead (18).

5. A voltage supply in accordance with claim 4, **characterized in that**, with an inner conductor (20) of the coaxial lead (18) in a defect-free state, the respective load (16) is connected to the voltage source (12) via this inner conductor (20).

6. A voltage supply in accordance with claim 4 or claim 5, **characterized in that**, with the inner conductor (20) in a defective state, the respective load (16) is connected to the voltage source (12) via the outer conductor (22) of the coaxial lead (18).

7. A voltage supply in accordance with any one of the preceding claims, **characterized in that** a defective state of the inner conductor (20) of the coaxial line (18) is present when this inner conductor (20) has been interrupted or has been short-circuited to ground (M).

8. A voltage supply in accordance with any one of the preceding claims, **characterized in that** a defective state of the outer conductor (22) of the coaxial line (18) is present when this outer conductor (22) has been short-circuited to ground (M).

9. A voltage supply in accordance with any one of the preceding claims, **characterized in that** a defective state of the outer conductor (22) of the coaxial line (18) is present when this outer conductor (22) has been short-circuited with respect to a different potential to ground (M).

10. A voltage supply in accordance with any one of the preceding claims, **characterized in that** means are provided for the signaling of a defective inner conductor (20) and/or means are provided for the signaling of a defective outer conductor (22) of the coaxial lead (18).

11. A voltage supply in accordance with any one of the preceding claims, **characterized in that** the means for the monitoring of the respective state of the two conductors (20, 22) of the coaxial lead (18) include at least three resistors (R1 - R3), preferably same resistors, of which one (R1) is connected between the terminal (24) of the voltage supply (12) not provided as ground (M) and the input (26) of the outer conductor (22), one (R3) is connected between the input (26) of the outer conductor (22) and ground (M) and one (R2) is connected between the output (28) of the outer conductor (22) and the respective load (16), with the state monitoring taking place via the voltage (U_{Detect}) which drops at the resistor (R3) connected between the input (26) of the outer conductor (22) and ground (M).

12. A voltage supply in accordance with claim 11, **characterized in that** a diode (32 or 34) poled in the forward direction is in each case connected between the output (30) of the inner conductor (20) and the load (16) and between the output (28) of the outer conductor (22) and the load (16), with the diode (34) provided between the output (28) of the outer conductor (22) and the load (16) being connected in parallel to the resistor (R2) provided between the output (28) of the outer conductor (22) and the load (16).

13. A voltage supply in accordance with claim 11 or claim 12,
**characterized in that** the resistors (R1 - R3) each have a value of approximately 1k.Ω.

14. A voltage supply in accordance with any one of the preceding claims,
**characterized in that** the switching means each include an electronic switch (S1 or S2).

15. A voltage supply in accordance with claim 14, **characterized in that** the switching means each include a transistor (S1 or S2), in particular a field effect transistor.

16. A voltage supply in accordance with any one of the preceding claims, **characterized in that** it includes a 12V network or a 42V network.

17. A voltage supply in accordance with any one of the preceding claims, **characterized in that** it includes a dual voltage network, in particular a 14V/42V network.

18. A voltage supply in accordance with any one of the preceding claims, **characterized in that** it is provided in conjunction with an x-by-wire system.

## Revendications

1. Alimentation en tension (10) en particulier pour véhicule automobile, avec au moins une source de tension (12) et un système de lignes (14) par lequel au moins une charge (16) peut être reliée à la source de tension (12), chaque charge (16) étant reliée d'une part à la masse (M) et d'autre part à une ligne (18) respective du système de lignes (14),
**caractérisée**
**en ce que** le système de lignes comprend au moins une ligne coaxiale (18) et la charge (16) concernée peut être reliée au choix, par le conducteur intérieur (20) et/ou le conducteur extérieur (22), à la source de tension (12), entre la borne (24) non prévue comme masse (M), de la source de tension (12) et l'entrée (36) du conducteur intérieur (20), ainsi qu'entre la borne (24) non prévue comme masse (M), de la source de tension (12) et l'entrée (26) du conducteur extérieur (22) étant prévus des moyens de commutation (S1 respectivement S2) respectifs, par lesquels chaque conducteur (20 ou 22) peut être relié à la borne (24), non prévue comme masse (M), de la source de tension (12), ou la liaison respective peut être interrompue.

2. Alimentation en tension selon la revendication 1,
**caractérisée**
**en ce que** les moyens de commutation (S1, S2) peuvent être commandés de manière que la charge (16) concernée ne soit reliée que par l'un des deux conducteurs (20, 22) de la ligne coaxiale (18), à la source de tension (12).

3. Alimentation en tension selon la revendication 1 ou 2,
**caractérisée**
**en ce que** des moyens (R1-R3) sont prévus pour le contrôle de l'état respectif des deux conducteurs (20, 22) de la ligne coaxiale (18).

4. Alimentation en tension selon l'une des revendications précédentes,
**caractérisée**
**en ce que** la charge (16) concernée est reliée, en fonction de l'état respectif des deux conducteurs (20, 22) de la ligne coaxiale (18), à la source de tension (12), par l'un ou l'autre conducteur.

5. Alimentation en tension selon la revendication 4,
**caractérisée**
**en ce que** dans le cas où le conducteur intérieur (20) de la ligne coaxiale (18) se trouve dans un état parfait, la charge (16) correspondante est reliée à la source de tension (12) par ce conducteur intérieur (20).

6. Alimentation en tension selon la revendication 4 ou 5,
**caractérisée**
**en ce que** dans le cas où le conducteur intérieur (20) se trouve dans un état défectueux, la charge (16) concernée est reliée à la source de tension (12) par le conducteur extérieur (22) de la ligne coaxiale (18).

7. Alimentation en tension selon l'une des revendications précédentes,
**caractérisée**
**en ce qu'**on est en présence d'un état défectueux du conducteur intérieur (20) de la ligne coaxiale (18) si ce conducteur intérieur (20) est interrompu ou court-circuité à la masse (M).

8. Alimentation en tension selon l'une des revendications précédentes,
**caractérisée**
**en ce qu'**on est en présence d'un état défectueux du conducteur extérieur (22) de la ligne coaxiale (18) lorsque ce conducteur intérieur (22) est court-circuité à la masse (M).

9. Alimentation en tension selon l'une des revendications précédentes,
**caractérisée**
**en ce qu'**on est en présence d'un état défectueux du conducteur extérieur (22) de la ligne coaxiale (18), lorsque ce conducteur extérieur (22) est court-circuité par rapport à un autre potentiel que la masse (M).

10. Alimentation en tension selon l'une des revendications précédentes,
**caractérisée**
**en ce que** des moyens sont prévus pour la signalisation d'un conducteur intérieur (20) défectueux et/ou des moyens pour la signalisation d'un conducteur extérieur (22) défectueux de la ligne coaxiale (18).

11. Alimentation en tension selon l'une des revendications précédentes,
**caractérisée**
**en ce que** les moyens de contrôle de l'état respectif des deux conducteurs (20, 22) de la ligne coaxiale (18) comprennent au moins trois résistances (R1-R3) de préférence égales dont une (R1) est couplée entre la borne (24), non prévue comme masse (M), de la source de tension (12) et l'entrée (26) du conducteur extérieur (22), une (R3) est couplée entre l'entrée (26) du conducteur extérieur (22) et la masse (M) et une (R2) est couplée entre la sortie (28) du conducteur extérieur (22) et la charge concernée (16), le contrôle de l'état s'effectuant à travers la tension (U_{detect}) qui chute sur la résistance (R3) couplée entre l'entrée (26) du conducteur extérieur (22) et la masse (M).

12. Alimentation en tension selon la revendication 11,
**caractérisée**
**en ce qu'**une diode (32 ou 34) avec polarisation dans le sens du passage est couplée entre la sortie (30) du conducteur intérieur (20) et la charge (16) et la sortie (28) du conducteur (22) et la charge (16), la diode (34), prévue entre la sortie (28) du conducteur extérieur (22) et la charge (16), étant couplée en parallèle à la résistance (R2) prévue entre la sortie (28) du conducteur extérieur (22) et la charge (16).

13. Alimentation en tension selon la revendication 11 ou 12,
**caractérisée**
**en ce que** les résistances (R1-R3) présentent chacune une valeur d'environ 1 kohm.

14. Alimentation en tension selon l'une des revendications précédentes,
**caractérisée**
**en ce que** les moyens de commutation comprennent chacun un interrupteur électronique (S1 respectivement S2).

15. Alimentation en tension selon la revendication 14,
**caractérisée**
**en ce que** les moyens de commutation comprennent chacun un transistor (S1 respectivement S2), en particulier un transistor à effet de champ.

16. Alimentation en tension selon l'une des revendications précédentes,
**caractérisée**
**en ce qu'**il comprend un réseau 12 V ou un réseau 42 V.

17. Alimentation en tension selon l'une des revendications précédentes,
**caractérisée**
**en ce qu'**il comprend un réseau à deux tensions, en particulier un réseau 14 V/42 V.

18. Alimentation en tension selon l'une des revendications précédentes,
**caractérisée**
**en ce qu'**il est prévu en combinaison avec un système x-by-wire.
